# EUROPEAN PATENT SPECIFICATION

(11) **EP 0 293 485 B1**
(45) Date of publication and mention of the grant of the patent: **02.06.1999**
(21) Application number: 87907675.0
(22) Date of filing: 19.11.1987
(51) Int. Cl.: B29C 49/06, B29C 49/08, B29B 11/14, B29B 11/08, B29C 49/64, B29K 23/00, B29L 22/00

(54) **INJECTION STRETCHING BLOW MOLDING OF POLYPROPYLENE OR THE LIKE**
SPRITZSTRECKBLASFORMEN VON POLYPROPYLEN ODER DERGLEICHEN
MOULAGE PAR INJECTION-GONFLAGE ET ETIRAGE

(30) Priority: 20.11.1986 JP 277307/86
(43) Date of publication of application: 07.12.1988
(73) Proprietor: Aoki, Shigeto, Hanishina-gun Nagano-ken (JP)
(72) Inventor: Aoki, Katashi, (JP)
(74) Representative: Twelmeier, Ulrich, Dipl.Phys.
(86) International application number: JP8700897
(87) International publication number: WO8803864

(56) References cited:
- EP-A- 0 074 246
- EP-A- 0 144 196
- GB-A- 2 010 734
- JP-A- 5 836 420
- JP-U- 5 850 926

## Description

### FIELD OF THE ART

This invention relates to the injection orientation blow molding of molded articles such as receptacles, bottles and the like formed of materials comprising synthetic resins such as polypropylene, polyamide and the like.

### BACKGROUND OF THE INVENTION

From EP 0 144 196 A3, there is known a process, where in the injection orientation blow molding, a lip portion of an injection-molded preform with a bottom is held and fixed while other portions are subjected to orientation blow molding.

The bottom which becomes a body after blow molding, is gradually reduced in thickness from its center toward its peripheral edge, being adjacent to a lip portion 21.

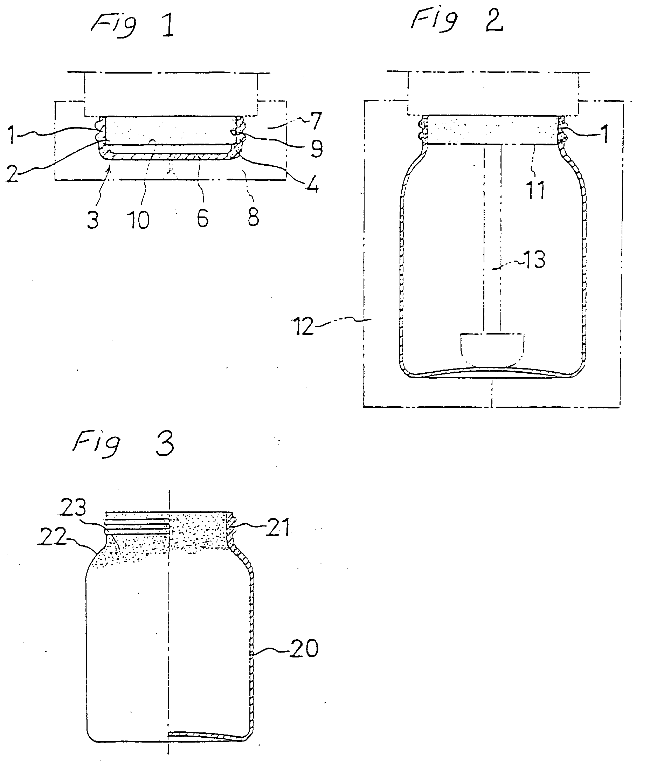

In this case, if the resin used as material for the molded article is a synthetic resin which is liable to become milky such as polypropylene, polyamide and the like, the orientation blow molded portion becomes transparent because of biaxial orientation but a portion from a lip portion 21 to a shoulder 22 of a molded article 20 remains to be milky as shown in FIG. 3.

Most of the lower edge of the milky portion 23 appear to be uneven in the shoulder 22, and for this reason, the external appearance of the article is impaired to reduce the value as the goods by half.

In view of the foregoing, the present inventor has repeatedly made various studies on the cause of generation of the milky portion 23 produced in the shoulder 22 of the molded article, as a consequence of which the inventor has found that this resulted from insufficient orientation of the lower side of the lip portion, and if a portion below said portion is sufficiently oriented, the milky portion 23 merely appears at the lip portion 21.

### SUMMARY OF THE INVENTION

It is an object of this invention to solve the above-described problems with respect to molded articles subjected to injection orientation blow molding by use of resins as materials which are liable to become milky such as polypropylene, polyamide and the like.

For achieving the above-described object, the present invention is featurized by injection molding a preform with a bottom in which a wall thickness of a lower portion of a peripheral wall of a lip portion is made thicker than other oriented portions by a shoulder provided internally thereof, and holding and fixing a lip portion of said preform to orientation blow mold a portion below said shoulder.

### BRIEF DESCRIPTION OF THE DRAWINGS

FIGS. 1 and 2 show the injection orientation blow molding method according to this invention; in which FIG. 1 is a sectional view of a preform indicated by dash-dotted contour lines, and FIG. 2 is likewise a sectional view of a molded article; and
FIG. 3 is a longitudinal sectional view of a half portion of a molded article obtained by a conventional molding method.

### BEST MODE FOR EMBODYING THE INVENTION

First, as shown in FIG. 1, a preform 3 with a bottom having a shoulder 2 provided at a lower part and internally of a lip portion 1 is injection molded, and a wall thickness of a lower portion 4 of a peripheral wall of the lip portion is made thicker than that of the lip portion 1 and a bottom 6 by the presence of said shoulder 2.

Formation of the shoulder 2 can be easily carried out by providing a shoulder 10 around the lower portion of a core mold 9 for forming a cavity as well as a lip mold 7 and an injection mold 8.

Subsequently, as shown in FIG. 2, the lip portion 1 is held and fixed at a position of the shoulder 2 by inserting a blow core 11, the lower side of the lip portion and the bottom 6 are oriented by a rod 13 from the shoulder 2 portion to the cavity bottom of a blow mold 12, and air is blown to fully inflate the cavity to mold the preform 3 into a hollow molded article 14.

In the above-described orientation, a portion that may be most easily stretched is a thick portion of the lower portion 4 of the peripheral wall of the lip portion formed to be thicker than other portions.

Among the portions to be oriented, the lower portion 4 of the peripheral wall of the lip portion formed to be thicker than other portions has much more heat-retaining amount than other portions so that even if the surface temperature during the progress of the orientation blow molding is lowered, the loss of heat is smaller than the case where the wall thickness of said portion is made to be the same as that of other portions, and the portion with the shoulder 2 as a boundary is well stretched.

As the result, the portion below the shoulder 2 is biaxially oriented by the orientation blow molding, and those other than the lip portion 1 become transparent. The milky portion is definitely separated from the transparent portion with the lower side of the lip portion where the shoulder 2 was present as a boundary as shown, and the lower edge of the milky portion is not extended to and above the shoulder.

While in the above-described embodiment, the boundary between the milky portion and the transparent portion is in the form of a straight line, if the wall thickness portion of the shoulder 2 is formed to be wavy, the boundary between said two portions becomes a wave shape. Accordingly, in the present invention, the shape of the shoulder 2 is not limited to the straight line as shown.

### INDUSTRIAL AVAILABILITY

As described above, in the present invention, the wall thickness of the lower portion of the peripheral wall of the lip portion is formed to be thicker than other oriented portions by the provision of the shoulder provided internally so that the heat retaining amount of the lower portion of the peripheral wall of the lip portion is increased to make orientation easy to thereby prevent the milky shoulder from being formed due to non-orientation. Therefore, even if polypropylene or polyamide is used as material, receptacles or the like in which only the lip portion becomes milky can be molded, and in addition, molded articles excellent in external appearance such that a milky portion and a transparent portion are defined with a straight line as a boundary can be easily molded. Therefore, the molded articles are very advantageous as receptacles and are very effective in industry and extensively used.

## Claims

1. A method for injection orientation blow molding a hollow molded article (14) of polypropylene or the like, comprising the steps of injection molding a preform (3) with a bottom (6) and a peripheral wall with a lip portion (1),
holding and fixing the lip portion (1) of said preform (3) and
orientation blow molding the portion below the lip portion (1) of said preform (3) to form said hollow molded article (14),
characterized in that said preform (3) is injection molded to have a lower portion (4) of said peripheral wall separated from the lip portion (1) by an internal shoulder (2), wherein said lower portion (4) is made thicker than the other portions (6) of the preform (3) which are to be oriented,
and orientation blow molding all portions (4, 6) of the preform (3) below said shoulder (2).

2. A method for injection orientation blow molding of polypropylene or the like according to claim 1 wherein molded articles of polypropylene or the like subjected to orientation blow molding comprise transparent receptacles or bottles of which lip portion becomes milky.

3. A method for injection orientation blow molding of polypropylene or the like according to claim 1 wherein said milky portion of the lip portion is definitely separately from the transparent portion of the body by a boundary.

## Patentansprüche

1. Verfahren zum Spritzstreckblasformen eines hohlen Formgegenstands (14) aus Polypropylen oder dergleichen, umfassend die Schritte: Spritzgießen eines Vorformlings (3) mit einem Boden (6) und einer Umfangswand mit einem Ausgussteil (1),
Halten und Befestigen des Ausgussteils (1) des besagten Vorformlings (3), und
Streckblasformen des Teils unterhalb des Ausgussteils (1) des besagten Vorformlings (3), um den besagten hohlen Formgegenstand zu formen,
dadurch gekennzeichnet, dass der besagte vorformling (3) so spritzgegossen wird, dass er einen vom Ausgussteil (1) durch eine innere Schulter (2) getrennten unteren Teil (4) der besagten Umfangswand aufweist, wobei der besagte untere Teil (4) dicker gemacht wird als die anderen Teile (6) des Vorformlings (3), die gestreckt werden sollen,
und Streckblasformen von sämtlichen Teilen (4, 6) des Vorformlings (3) unterhalb der besagten Schulter (2).

2. Verfahren zum Spritzstreckblasformen von Polypropylen oder dergleichen nach Anspruch 1, bei dem einem Streckblasformen unterworfene Formgegenstände aus Polypropylen oder dergleichen durchsichtige Gefäße oder Flaschen umfassen, deren Ausgussteil milchig wird.

3. Verfahren zum Spritzstreckblasformen von Polypropylen oder dergleichen nach Anspruch 1, bei dem der besagten milchige Teil des Ausgussteils vom durchsichtigen Teil des Körpers durch eine Grenzlinie bestimmt getrennt ist.

## Revendications

1. Procédé de moulage par injection et soufflage avec orientation d'un article moulé creux (14) en polypropylène ou matière similaire, comprenant les étapes consistant à mouler par injection une préforme (3) comportant un fond (6) et une paroi périphérique pourvue d'une portion formant goulot (1), à maintenir et fixer la portion formant goulot (1) de la préforme (3) et à mouler par soufflage avec orientation la portion de la préforme (3) se trouvant en dessous de la portion formant goulot (1), afin de former l'article moulé creux (14), caractérisé en ce que la préforme (3) est moulée par injection de manière à présenter une portion inférieure (4) de sa paroi périphérique qui est séparée de la portion formant goulot (1) par un épaulement interne (2), la portion inférieure (4) étant plus épaisse que les autres portions (6) de la préforme (3) qui doivent être orientées, et toutes les portions (4,6) de la préforme (3) situées en dessous de l'épaulement (2) sont moulées par soufflage avec orientation.

2. Procédé de moulage par injection et par soufflage avec orientation de polypropylène ou d'une matière similaire suivant la revendication 1 caractérisé en ce que les articles moulés en polypropylène ou matière similaire soumis au moulage par soufflage avec orientation constituent des bouteilles ou contenants transparents dont la portion formant goulot (1) devient laiteuse.

3. Procédé de moulage par injection et par soufflage avec orientation de polypropylène ou d'une matière similaire suivant la revendication 1 caractérisé en ce que la portion laiteuse de la portion formant goulot (1) est séparée nettement par une frontière de la portion transparente du corps.
